# EUROPÄISCHE PATENTSCHRIFT

(11) **EP 1 936 328 B1**
(45) Veröffentlichungstag und Bekanntmachung des Hinweises auf die Patenterteilung: **10.02.2010**
(21) Anmeldenummer: 07120430.9
(22) Anmeldetag: 12.11.2007
(51) Int. Cl.: G01C 21/36

(54) **Verfahren zum Darstellen eines Kartenausschnittes in einem Navigationssystem und Navigationssystem hierfür**
Method for representing a map segment in a navigation system and navigation system therefor
Procédé de représentation d'une section de carte dans un système de navigation et système de navigation correspondant

(30) Priorität: 22.12.2006 DE 102006061230
(43) Veröffentlichungstag der Anmeldung: 25.06.2008
(73) Patentinhaber: ROBERT BOSCH GMBH, 70442 Stuttgart (DE)
(72) Erfinder: Valentin, Fabrice, 64100 Bayonne (FR); Garrelts, Mathias, 31188 Holle (DE)

(56) Entgegenhaltungen:
- EP-A- 1 085 299
- EP-A- 1 189 176
- DE-A1- 10 023 160
- JP-A- 2000 112 343
- JP-A- 2006 242 888

## Beschreibung

Die vorliegende Erfindung betrifft ein Verfahren zum Darstellen eines Kartenausschnittes in einem Navigationssystem, bei dem der Kartenausschnitt mit einem Straßennetz sowie weiteren Objekten in einer perspektivischen bzw. dreidimensionalen Ansicht dargestellt wird und selektierte Objekte transparent gezeichnet werden, so dass Streckenabschnitte des Straßennetzes entlang einer berechneten Route sichtbar angezeigt werden. Die Erfindung betrifft ferner ein Navigationssystem zur Durchführung des Verfahrens.

Navigationssysteme sind hinreichend bekannt, bei denen auf einem Display bzw. einem Bildschirm ein Kartenausschnitt angezeigt wird, in dem die aktuelle Fahrzeugposition und die nähere Umgebung des Fahrzeugs angezeigt werden. Neben der Darstellung des Straßennetzes werden zusätzliche topografische Informationen, beispielsweise Gewässer, Wälder und/oder eine Bebauung wiedergegeben.

In Navigationssystemen der jüngeren Generation können auch 3D-Karten angezeigt werden. Die Bildschirmausgabe zeigt den Kartenausschnitt für einen Betrachter aus der Vogelperspektive. Damit ist es sinnvoll, auch anzuzeigende Gebäude oder andere Objekte dreidimensional zu zeichnen. Die Außenfassaden der Gebäude können hierbei mit Texturen versehen werden und realitätsnahe Dächer können ferner modelliert werden. Unter dem Begriff der dreidimensionalen Darstellung wird eine perspektivische Ansicht einer in der Realität zweidimensionalen Bildschirmausgabe verstanden.

Die dreidimensional gezeichneten Objekte, beispielsweise Bauwerke oder auch natürliche Erhebungen, können die für einen Betrachter aus seiner Blickrichtung dahinter liegenden Strukturen verdecken. Die verdeckten Strukturen haben aber möglicherweise eine wesentlichere Bedeutung für den Betrachter als das sie verdeckende Objekt selbst. Als einfachstes Beispiel hierfür dient ein Gebäude, das zwischen dem Betrachter und der berechneten Route angeordnet ist und somit zum Teil die Route in der Blickrichtung des Betrachters verdeckt. Dies ist insbesondere dann von Nachteil, wenn sich in dem verdeckten, nicht einsehbaren Routenbereich ein Kreuzungspunkt befindet.

Damit die Straßen der berechneten Route durch dreidimensional dargestellte Objekte nicht verdeckt werden, sind Navigationssysteme bekannt, die einen Teil der dreidimensionalen Objekte transparent darstellen. Bei diesen Systemen werden die transparenten Objekte derart selektiert, dass entweder nur die berechnete Route vollständig freigestellt ist oder sämtliche dreidimensionale Objekte in der Nähe der berechneten Route ausgewählt werden, unabhängig davon, ob diese die Route verdecken oder nicht.

Dadurch können aber unter Umständen Objekte nicht mehr dargestellt werden, die die Anzeige der berechneten Route zwar gar nicht beeinträchtigt haben, aber eine wichtige Information für den Betrachter bzw. Anwender darstellen.

Aus der DE 100 23 160 A1 ist ebenfalls ein Navigationssystem mit dreidimensionaler Gebäudedarstellung bekannt, wobei bei Verdeckung eines Routenabschnitts durch ein Gebäude dieses im Bereich des verdeckten Routenabschnitts teiltransparent dargestellt wird, so dass der Routenabschnitt gedämpft hindurch scheint.

Die Aufgabe der vorliegenden Erfindung ist es daher, die Darstellung eines Kartenausschnittes in einem Navigationssystem zu verbessern und insbesondere die Erkennbarkeit der dargestellten Information zu erhöhen. Diese Aufgabe wird durch ein Verfahren mit den Merkmalen gemäß Anspruch 1 sowie durch ein Navigationssystem mit den Merkmalen des Anspruchs 6 gelöst.

Bei einem Verfahren der eingangs beschriebenen Art ist erfindungsgemäß vorgesehen, dass die Selektion der transparenten Objekte derart erfolgt, dass zusätzlich an die Streckenabschnitte der berechneten Route angrenzende Streckenabschnitte in Abhängigkeit ihrer Relevanz sichtbar angezeigt werden. Auf diese Weise sind beispielsweise Kreuzungen, die als mögliche Gefahrenpunkte eine hohe Relevanz aufweisen, für den Anwender deutlich erkennbar, selbst wenn diese Verkehrskreuzungen bei einer Fahrt gemäß der zuvor berechneten Route lediglich passiert werden. Ferner werden die dreidimensionalen Objekte in der Nähe der berechneten Route, die zu keiner Sichtbeeinträchtigung führen, nicht aus der Kartendarstellung entfernt und dienen weiterhin der Information des Anwenders.

Bevorzugt ist bei dem erfindungsgemäßen Verfahren vorgesehen, dass zur Ermittlung der Relevanz die Wahrscheinlichkeit für ein Befahren des Streckenabschnittes berechnet wird. Die Nutzungswahrscheinlichkeit für einen Streckenabschnitt kann unter bestimmten Annahmen als Größe berechnet werden, die hierbei als Indiz für die Bedeutung des Streckenabschnittes für den weiteren Verlauf der Fahrstrecke herangezogen werden kann.

Eine vorteilhafte Ausgestaltung des erfindungsgemäßen Verfahrens sieht vor, dass die Selektion derart erfolgt, dass zusätzlich für einen Fahrer sinnvolle Information sichtbar angezeigt wird. Neben der berechneten Route und angrenzender Streckenabschnitte können beispielsweise die aktuelle Fahrzeugposition, wichtige Point-of-Interests, Ziele und/oder benutzerspezifische Symbole als für den Fahrer wichtige Information deutlich sichtbar angezeigt werden.

In vorteilhafter Weise erfolgt die transparente Darstellung eines dreidimensionalen Objektes mittels Überlagerungsverfahren. Dies kann beispielsweise das mit Alpha-Blending bezeichnete Verfahren sein, so dass das transparente Objekt nicht vollständig entfernt wird, sondern nur so weit transparent gezeichnet wird, dass die dahinter liegende Struktur erkennbar wird. Auf diese Weise ist für den Anwender sowohl die verdeckende Struktur als auch die verdeckte Struktur sichtbar, so dass er eine umfassende Information aus dem dargestellten Kartenausschnitt erhält.

Zur Reduzierung des erforderlichen Rechenaufwandes zur Erstellung der grafischen Kartendarstellung ist bei einer vorteilhaften Ausgestaltung des erfindungsgemäßen Verfahrens vorgesehen, dass die Objekte in der Fahrzeugumgebung dreidimensional und die Objekte im Hintergrund zweidimensional dargestellt werden.

Nachfolgend wird die Erfindung anhand der detaillierten Beschreibung eine Ausführungsform unter Bezug auf die beigefügten Zeichnungen beispielhaft näher erläutert, in denen
- Figur 1: schematisch skizziert den prinzipiellen Aufbau des erfindungsgemäßen Navigationssystems zeigt;
- Figur 2: das grundlegende Prinzip zur Ermittlung störender dreidimensionaler Objekte erläutert; und
- Figur 3: einen beispielhaften Kartenausschnitt mit dreidimensionalen Objekten wiedergibt.

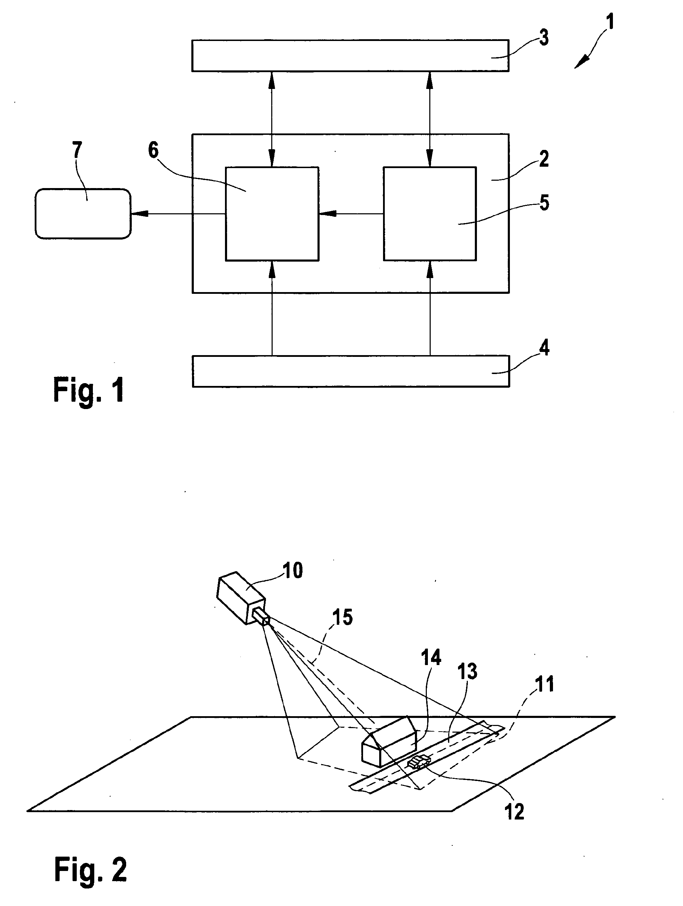

Figur 1 zeigt den prinzipiellen Aufbau eines erfindungsgemäßen Navigationssystems 1 in einer vereinfachten und schematisierten Skizze. Kernelement des Navigationssystems 1 ist eine Datenverarbeitungseinheit 2, beispielsweise ein geeigneter Mikroprozessor. Die Datenverarbeitungseinheit 2 ist mit einer Eingabeeinrichtung 3 bzw. einem HMI (Human Machine Interface) verbunden, über die eine Kommunikation mit dem Anwender stattfindet. Dies können beispielsweise die Zielangabe oder Randbedingungen für die Routenberechnung sein. Der Datenaustausch zwischen Der Datenverarbeitungseinheit 2 und der Eingabeeinrichtung 3 wird durch entsprechende Doppelpfeile in der Figur 1 angedeutet.

Ferner ist die Datenverarbeitungseinheit 2 mit einer Speichereinrichtung 4 verbunden, in der eine digitalisierte Karte eines Straßennetzes sowie weitere erforderliche geografische Daten und Objektdaten abgelegt sind. Die Datenübertragung von der Speichereinrichtung 4 auf die Datenverarbeitungseinheit 2 wird durch entsprechende einfache Pfeile in der Figur 1 angedeutet.

In der Datenverarbeitungseinheit 2 ist ein Navigationsmodul 5 zur Durchführung und Berechnung der eigentlichen Navigation, beispielsweise Routenberechnung und Generierung der Zielführungsdaten, vorgesehen. Weiterhin ist in der Datenverarbeitungseinheit 2 ein Grafikmodul 6 vorgesehen, um die von dem Navigationsmodul 5 empfangenen Navigationsdaten für eine anzeigefähige Darstellung bzw. Grafik aufzubereiten. Das Grafikmodul 6 greift hierbei ebenfalls auf in der Speichereinrichtung 4 abgelegte Objektdaten sowie auch auf Eingabedaten der Eingabeeinrichtung 3 zurück. Die von dem Grafikmodul 6 aufbereitete Grafik kann anschließend auf einem Bildschirm bzw. einem Display 7 dem Anwender angezeigt und ausgegeben werden.

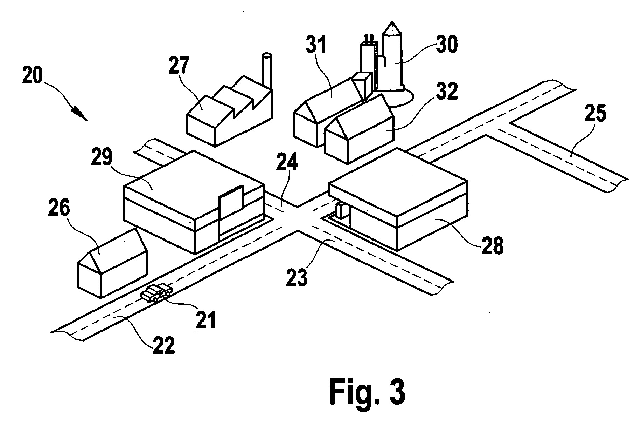

Die Funktionsweise der Erfindung wird anhand der Figuren 2 und 3 nachfolgend erläutert. Bei einem Navigationssystem mit einer perspektivischen bzw. dreidimensionalen Ansicht wird die Kartendarstellung aus der Vogelperspektive präsentiert. Dem Anwender stellt sich die Situation so dar, als ob er aus der Position der virtuellen Kamera 10 den Kartenausschnitt 11 ansieht. Die dreidimensionale Darstellung ist dabei streng genommen eine zweidimensionale Zeichnung aus der Vogelperspektive. Der Raum vor der Kamera, den der Anwender sieht, wird auch mit "View Frustum" bezeichnet und ist in der Figur 2 durch die Strichlinie 11 angedeutet.

Im vorliegenden Beispiel befindet sich in dem von der Strichlinie 11 umgebenen Kartenausschnitt ein dreidimensionales Fahrzeugmodell 12, das einem Streckenabschnitt bzw. einer Straße 13 entlang fährt. Zwischen dem Fahrzeugmodell 12 und dem Beobachter an der Position der virtuellen Kamera 10 befindet sich als dreidimensionales Objekt ein Gebäude 14. Mit Hilfe der Strichlinie 15 wird in der Figur 2 gezeigt, dass der Blick des Anwenders/der Kamera auf das Gebäude 14 und nicht auf das sich in Blickrichtung dahinter befindliche Fahrzeug 12 fällt. Somit wird das Fahrzeug 12 und ein Teil der Straße 13 durch das Gebäude 14 verdeckt.

Figur 3 zeigt einen Kartenausschnitt 20 mit einer anderen Beispielsituation, diesmal aus der Sicht des Anwenders. Ausgehend von der aktuellen Position des Fahrzeuges 21 generiert das Navigationsmodul 5 (aus Figur 1) einen Horizont mit befahrbaren Straßen 22, 23, 24 und 25. Es wird somit ein Netz über alle Straßen aufgespannt, die vor dem Fahrzeug 21 liegen. Hierbei grenzen die Straßen entweder direkt, wie die Straßen 23 und 24, oder indirekt an die aktuell befahrene Straße 22. Alle Straßen 22, 23, 24 und 25 in dem Horizont sind mit Wahrscheinlichkeiten für die Nutzung gewichtet, die als ein Maß für die Relevanz der entsprechenden Straße verwendet wird.

Gegebenenfalls sind die Straßen 22, 23, 24 und 25 mit weiterer Information versehen, beispielsweise Point-of-Interests, Verkehrsinformationen, Warnhinweise etc. Ausgehend von der Kameraposition kann nun für jede Straße 22, 23, 24 und 25 überprüft werden, ob sie durch ein oder mehrere dreidimensionale Objekte verdeckt wird. Ist dies der Fall, so werden die entsprechenden Objekte oder Gebäude transparent gezeichnet.

In dem vorliegenden Beispiel der Figur 3 sind die Gebäude 26 und 27 aus der Blickrichtung des Anwenders hinter der befahrenen Straße 22 angeordnet. Deshalb verdecken sie selbige nicht und werden vollständig und ohne Einschränkung gezeichnet. Das Gebäude 28 befindet sich, aus der Blickrichtung des Anwenders betrachtet, vor der zur berechneten Route gehörenden Straße 22 und verdeckt somit diese. Deshalb wird das Gebäude 28 transparent gezeichnet.

Das Gebäude 29 ist in der Blickrichtung des Anwenders hinter der Straße 22 angeordnet und verdeckt deshalb nicht die Straße 22 der berechneten Route. Die Straße 24 grenzt aber direkt an die Straße 22 an. Da der Führer des Fahrzeugs 12 nicht zwanghaft der Zielführung durch das Navigationssystem 1 (aus Figur 1) Folge leisten muss, kann das Fahrzeug mit einer gewissen Wahrscheinlichkeit in die Straße 24 abbiegen. Aus der Nutzungswahrscheinlichkeit für die Straße 24 und der Gewichtung, beispielsweise weil die Kreuzung der Straßen 22 und 24 eine besondere Gefahrenlage darstellt, kann nun die Relevanz der Straße 24 berechnet werden. Da die Straße 24 aber durch das Gebäude 29 verdeckt wird, wird bei einer hohen Relevanz der Straße 24 auch dieses Gebäude 29 transparent gezeichnet, obwohl es die Sicht auf die eigentlich berechnete Route gar nicht einschränkt.

Schließlich ist in dem Kartenausschnitt der Figur 3 ein wichtiger Point-of-Interest 30 vorhanden, der teilweise durch Gebäude 31 und 32 verdeckt wird, die ihrerseits keinerlei Behinderung für die Ansicht der berechneten Route oder anderer relevanter Streckenabschnitte des Straßennetzes darstellen. Die Gebäude 31 und 32 sind aber für den Anwender weniger bedeutend als der durch sie verdeckte Point-of-Interest 30. Deshalb werden erfindungsgemäß auch die Gebäude 31 und 32 transparent gezeichnet, um den Blick auf den Point-of-Interest 30 frei zu geben.

Die vorstehend des mehrfach angesprochene Transparenz kann bedeuten, dass das transparente Objekt vollständig unsichtbar gemacht wird. Der Anwender bekommt in diesem Fall gar nicht mit, dass ein möglicherweise vorhandenes Objekt für ihn nicht dargestellt wird. Alternativ kann ein transparentes Objekt als teilweise durchlässig in der Kartendarstellung eingezeichnet werden. Dies kann beispielsweise mittels des so genannten Alpha-Blendings oder jedes anderen geeigneten Einblend- bzw. Überlagerungsverfahrens erfolgen. Der Vorteil hierbei ist, dass die Information über das transparent gezeichnete Objekt nicht vollständig verloren geht, und die hinter dem transparenten Objekt angeordnete Struktur dennoch erkennbar wird.

## Patentansprüche

1. Verfahren zum Darstellen eines Kartenausschnittes (20) in einem Navigationssystem (1), bei dem der Kartenausschnitt (20) mit einem Straßennetz sowie weiteren Objekten (26, 27, 28, 29, 30, 31, 32) in einer perspektivischen bzw. dreidimensionalen Ansicht dargestellt wird und selektierte Objekte (28, 29, 31, 32) transparent gezeichnet werden, so dass Streckenabschnitte (23) des Straßennetzes entlang einer berechneten Route sichtbar angezeigt werden, **dadurch gekennzeichnet, dass** die Selektion der transparenten Objekte (29) derart erfolgt, dass zusätzlich an die Streckenabschnitte (23) der berechneten Route angrenzende Streckenabschnitte (24) in Abhängigkeit ihrer Relevanz sichtbar angezeigt werden.

2. Verfahren nach Anspruch 1, **dadurch gekennzeichnet, dass** zur Ermittlung der Relevanz die Wahrscheinlichkeit für ein Befahren des Streckenabschnittes (24) berechnet wird.

3. Verfahren nach Anspruch 1 oder Anspruch 2, **dadurch gekennzeichnet, dass** die Selektion derart erfolgt, dass zusätzlich für einen Fahrer sinnvolle Information sichtbar angezeigt wird.

4. Verfahren nach einem der vorstehenden Ansprüche, **dadurch gekennzeichnet, dass** die transparente Darstellung eines Objektes (28, 29, 31, 32) mittels Überlagerungsverfahren erfolgt.

5. Verfahren nach einem der vorstehenden Ansprüche, **dadurch gekennzeichnet, dass** die Objekte in der Fahrzeugumgebung dreidimensional und die Objekte im Hintergrund zweidimensional dargestellt werden.

6. Navigationssystem mit
- einer Eingabeeinrichtung (3);
- einer Speichereinrichtung (4) für eine digitalisierte Karte eines Straßennetzes und für Objektdaten;
- einer Datenverarbeitungseinheit (2), die eingerichtet ist, die Navigation zu berechnen und Zielführungsdaten mit einem Kartenausschnitt zu generieren, in den ein Straßennetz sowie weitere Objekte in einer perspektivischen bzw. dreidimensionalen Ansicht dargestellt sind und selektierte Objekte transparent gezeichnet sind, so dass Streckenabschnitte entlang einer berechneten Route sichtbar angezeigt sind, und
- eine Ausgabeeinrichtung (7) zur Ausgabe der Zielführungsdaten und zur Anzeige des Kartenausschnittes,
**dadurch gekennzeichnet, dass** die Datenverarbeitungseinheit (2) ferner eingerichtet ist, dass die Selektion der transparenten Objekte derart erfolgt, dass zusätzlich an die Streckenabschnitte der berechneten Route angrenzende Streckenabschnitte in Abhängigkeit ihrer Relevanz sichtbar angezeigt sind.

## Claims

1. Method for showing a map detail (20) in a navigation system (1), in which the map detail (20) is shown with a road network and with further objects (26, 27, 28, 29, 30, 31, 32) in a perspective or three-dimensional view and selected objects (28, 29, 31, 32) are shown transparently, so that route sections (23) of the road network are displayed visibly along a calculated route, **characterized in that** the transparent objects (29) are selected such that additionally route sections (24) which adjoin the route sections (23) of the calculated route are displayed visibly on the basis of their relevance.

2. Method according to Claim 1. **characterized in that** to ascertain the relevance the probability of travel on the route section (24) is calculated.

3. Method according to Claim 1 or Claim 2, **characterized in that** the selection is made such that information which is useful to a driver is additionally displayed visibly.

4. Method according to one of the preceding claims, **characterized in that** an object (28, 29, 31, 32) is shown transparently by means of superimposition methods.

5. Method according to one of the preceding claims, **characterized in that** the objects in the vehicle surroundings are shown three-dimensionally and the objects in the background are shown two-dimensionally.

6. Navigation system having
- an input device (3);
- a memory device (4) for a digitized map of a road network and for object data;
- a data processing unit (2) which is set up to calculate the navigation and to generate routing data with a map detail in which a road network and further objects are shown in a perspective or three-dimensional view and selected objects are shown transparently, so that route sections are displayed visibly along a calculated route, and
- an output device (7) for outputting the routing data and for displaying the map detail, **characterized in that** the data processing unit (2) is also set up such that the transparent objects are selected such that additionally route sections which adjoin the route sections of the calculated route are displayed visibly on the basis of their relevance.

## Revendications

1. Procédé de présentation d'une partie (20) de carte dans un système de navigation (1), dans lequel la partie (20) de carte est présentée avec un réseau routier ainsi que d'autres objets (26, 27, 28, 29, 30, 31, 32) dans une vue en perspective ou en trois dimensions et des objets sélectionnés (28, 29, 31, 32) sont indiqués en transparence de telle sorte que des parties (23) de parcours du réseau routier puissent être affichées de manière visible le long d'un itinéraire calculé, **caractérisé en ce que**
la sélection des objets transparents (29) s'effectue en affichant de manière visible en fonction de leur pertinence des parties de parcours (24) adjacentes aux parties de parcours (23) de l'itinéraire calculé.

2. Procédé selon la revendication 1, **caractérisé en ce que** pour déterminer la pertinence, la probabilité de passer sur la partie de parcours (24) est calculée.

3. Procédé selon la revendication 1 ou la revendication 2, **caractérisé en ce que** la sélection s'effectue en affichant de manière visible des informations supplémentaires intéressantes pour le conducteur.

4. Procédé selon l'une des revendications précédentes, **caractérisé en ce que** la présentation transparente d'un objet (28, 29, 31, 32) s'effectue par une opération de superposition.

5. Procédé selon l'une des revendications précédentes, **caractérisé en ce que** les objets situés dans l'environnement du véhicule sont présentés en trois dimensions et les objets situés en arrière-plan en deux dimensions.

6. Système de navigation qui présente :
- un dispositif d'introduction (3),
- un dispositif de mémoire (4) d'une carte numérisée d'un réseau routier et de données d'objets,
- une unité (2) de traitement de données conçue pour calculer la navigation et produire des données de guidage vers la destination en même temps qu'une partie de carte dans laquelle un réseau routier ainsi que d'autres objets sont représentés dans une vue en perspective ou en trois dimensions, les objets sélectionnés étant présentés en transparence de manière à afficher de manière visible des parties de parcours sur un itinéraire calculé et
- un dispositif de sortie (7) qui délivre des données de guidage vers la destination et qui affiche la partie de carte,
**caractérisé en ce que**
l'unité (2) de traitement de données est en outre conçue de telle sorte que la sélection des objets transparents s'effectue en affichant de manière visible en fonction de leur pertinence des parties supplémentaires de parcours adjacentes aux parties de parcours de l'itinéraire calculé.
